# EUROPEAN PATENT APPLICATION

(11) **EP 4 732 994 A1**
(43) Date of publication of application: **29.04.2026**
(21) Application number: 25207925.6
(22) Date of filing: 10.10.2025
(51) Int. Cl.: B23Q 17/09, B23B 31/20

(54) **MACHINE TOOL**

(30) Priority: 23.10.2024 JP 2024186431
(71) Applicant: Star Micronics Co., Ltd., Shizuoka-shi, Shizuoka 422-8654 (JP)
(72) Inventor: Kagawa, Yuki, Shizuoka-shi, Shizuoka (JP); Shigama, Koichiro, Shizuoka-shi, Shizuoka (JP); Deno, Masatoshi, Shizuoka-shi, Shizuoka (JP); Saito, Hiroki, Shizuoka-shi, Shizuoka (JP); Kaji, Yusuke, Shizuoka-shi, Shizuoka (JP)
(74) Representative: Grünecker Patent- und Rechtsanwälte PartG mbB

(57) **Abstract**

There is provided a machine tool that can accurately derive a gripping force of a gripping unit with a low-cost configuration.

The machine tool includes: a first spindle that includes a collet chuck that grips a workpiece; a first headstock that rotatably supports the first spindle; an air cylinder that generates a driving force for changing a state of the collet chuck between a gripping state for gripping the workpiece and a release state for releasing the grip of the workpiece; a non-rotary transmitting member that transmits the driving force received from the air cylinder; a rotary transmitting member that rotates together the first spindle and transmits to the collet chuck the driving force received from the non-rotary transmitting member; strain detection means that is attached to the non-rotary transmitting member and detects a strain of the non-rotary transmitting member produced when the driving force is transmitted from the air cylinder to the collet chuck, and a deriving unit that derives the gripping force of the collet chuck based on a detection result of the strain detection means.

## Description

### CROSS-REFERENCES

The application claims priority of Japanese Patent Application No. 2024-186431 filed on October 23, 2024. The contents of this application are incorporated herein by reference in their entirety.

### BACKGROUND OF THE INVENTION

### 1. Field of the Invention

The present invention relates to a machine tool that machines a workpiece gripped by a spindle.

### 2. Description of the Related Art

There are known machine tools that each machine a bar-shaped workpiece gripped by a rotatable spindle (see, for example, Japanese Patent Application Publication No. 2020-97075). The spindle of this machine tool is rotatably supported by a headstock. The spindle is provided with a gripping unit whose state changes between a gripping state for gripping a workpiece and a release state for releasing grip of a workpiece. The gripping unit is operated by an actuator fixed to the headstock. In the machine tool according to this Japanese Patent Application Publication No. 2020-97075, when an actuator is driven, a shifter lever swings and, when the shifter is displaced, claw members incline. Furthermore, when the inclination of the claw members moves a push sleeve and a chuck sleeve along the axis of the spindle, the gripping unit grips or releases grip of the workpiece.

Furthermore, generally, the spindle is provided with an adjustment nut as adjustment means for adjusting the gripping force of a workpiece. This adjustment nut is attached to a spindle main body so as to be relatively rotatable with respect to the spindle main body, and is relatively rotated to displace a position in an axis direction of the adjustment nut with respect to the spindle main body and change the gripping force of the workpiece. An operator of a machine tool adjusts the gripping force for the workpiece by inserting the workpiece to be machined next into a gripping unit, and relatively rotating the adjustment nut with respect to the spindle main body during so-called setup work performed when machining a workpiece having a different diameter or a workpiece of a different material from that of a workpiece that has been machined so far. Furthermore, the operator of the machine tool manually operates the shifter lever for displacing a shifter, estimates the gripping force of the gripping unit from a force necessary for this operation, repeats relative rotation of the adjustment nut and the estimation, and fixes the adjustment nut to the spindle main body at a position at which the force becomes a desired gripping force.

### SUMMARY OF THE INVENTION

However, a conventional adjustment method has a problem that a gripping force is estimated depending on an operator's sense, and therefore estimation accuracy of the gripping force is low. Furthermore, after adjustment of the gripping force, the gripping force may also change due to wear and thermal displacement of mechanisms such as a shifter and claw members interposed between the actuator and the gripping unit, and due to change over time or aging over time such as deterioration of a rubber seal. Hence, although it is also concerned that a difference is produced between the gripping force of the gripping unit after adjustment and a gripping force estimated at the time of adjustment, it has not been possible to recognize this difference. As a measure for these problems, it is also conceivable to attach measurement means such as a load cell to the gripping unit and detect a gripping force. However, an expensive apparatus such as a slip ring is necessary to obtain a detection result from the measurement means attached to a rotating spindle. In addition, it is also concerned that the spindle rotates at a high speed, and therefore noise is produced at a sliding part between the spindle and a non-rotary part such as the slip ring, and reliability of the detection signal lowers.

With the above-described problem in view, it is an object of the present invention to provide a machine tool that can accurately derive a gripping force of a gripping unit with a low-cost configuration.

A machine tool according to the present invention that solves the above problem includes: a spindle that includes a gripping unit that grips a workpiece; a headstock that rotatably supports the spindle; an actuator that is attached to the headstock and generates a driving force for changing a state of the gripping unit between a gripping state for gripping the workpiece and a release state for releasing the grip of the workpiece; a non-rotary transmitting member that is attached to the headstock and transmits the driving force received from the actuator; a rotary transmitting member that rotates together the spindle and transmits to the gripping unit the driving force received from the non-rotary transmitting member; strain detection means that is attached to the non-rotary transmitting member, and detects a strain of the non-rotary transmitting member produced when the driving force is transmitted from the actuator to the gripping unit; and a deriving unit that derives a gripping force of the gripping unit based on a detection result of the strain detection means.

According to this machine tool, the gripping force of the gripping unit is derived on the basis of the strain produced when the driving force is transmitted from the actuator to the gripping unit, so that the gripping force of the gripping unit can be accurately derived, and does not vary depending on an operator. Furthermore, the gripping force of the gripping unit can be derived for each gripping operation (an operation of changing the state from the release state to the gripping state) of a workpiece executed between machining and machining when this machine tool continuously performs machining using an NC program, so that it is possible to recognize that change over time or aging over time has occurred. In addition, since the strain detection means is attached to the non-rotary transmitting member, a detection result of the strain detection means can be communicated by low-cost communication means, so that it is possible to configure this machine tool at low cost compared to a case where measurement means is attached to the rotary transmitting member.

Here, the gripping unit may be a collet chuck. The non-rotary transmitting member may transmit a driving force from the actuator to the rotary transmitting member. The rotary transmitting member may be attached to the spindle. The deriving unit may derive the gripping force of the gripping unit in the gripping state based on a strain produced in the non-rotary transmitting member at a time of the change of the state from the release state to the gripping state.

In this machine tool, the rotary transmitting member may include a claw member that can change a posture between a first posture for bringing the gripping unit into the gripping state and a second posture for bringing the gripping unit into the release state, and a shifter that can change a position between a first position for causing the claw member to take the first posture and a second position for causing the claw member to take the second posture by moving in an axis direction of the spindle, the non-rotary transmitting member may include a shifter lever that moves the shifter in the axis direction, and the strain detection means may detect a strain of the shifter lever.

The shifter lever is positioned on the downstream side in a transmission path of the driving force in the non-rotary transmitting member, and consequently is more hardly affected by disturbance than a member positioned on the upstream side in the transmission path of the driving force. Consequently, it is possible to more accurately derive the gripping force of the gripping unit.

Here, the claw member may change the posture by pivoting within a predetermined angle range. Furthermore, the claw member may be pivotable about a perpendicular direction perpendicular to the axis direction (rotation center axis direction) of the spindle. The shifter lever may swing about a swing center axis by a driving force generated by the actuator.

In this machine tool, the strain detection means may detect a strain at a portion between a force reception portion at which the shifter lever receives the driving force from the actuator, and an action portion at which a reaction force received by the shifter lever from the shifter acts when the driving force received by the shifter lever is transmitted to the shifter.

By so doing, it is possible to accurately detect the strain produced in the shifter lever when the driving force from the actuator is transmitted.

Furthermore, in this machine tool, the shifter lever may be swingable about a swing center axis as a swing center, and may swing to move the shifter in the axis direction, the strain detection means may be formed in parallel to the swing center axis, and detect the strain on a side surface of the shifter lever.

By so doing, the strain detection means can also accurately detect the strain produced when the driving force from the actuator is transmitted.

Furthermore, in this machine tool, the shifter lever may be swingable about a swing center axis as a swing center, and may swing to move the shifter in the axis direction, and the strain detection means may detect a strain at a portion at which a distance from the swing center axis is shorter than a distance from the force reception portion and the action portion.

The strain produced in the shifter lever when the driving force from the actuator is transmitted is larger in the vicinity of the swing center axis than in the vicinity of the force reception portion or the vicinity of the action portion, so that it is possible to accurately detect the strain by shortening the distance from the swing center axis.

Here, the swing center axis may be positioned between the force reception portion and the action portion.

Furthermore, in this machine tool, the deriving unit may derive the gripping force of the gripping unit based on a maximum value of the strain of the non-rotary transmitting member at a time of the change of the state from the release state to the gripping state detected by the strain detection means.

There is a correlation between the maximum value of the strain detected by the strain detection means and the gripping force of the gripping unit, so that it is possible to accurately derive the gripping force of the gripping unit based on the maximum value of the strain.

According to the present invention, it is possible to provide a machine tool that can accurately derive the gripping force of the gripping unit with a low-cost configuration.

### BRIEF DESCRIPTION OF THE DRAWINGS

FIG. 1 is a plan view briefly illustrating an internal configuration of an NC lathe according to the present embodiment;
FIG. 2 is a perspective cross-sectional view of a partially cut first headstock and first spindle illustrated in FIG. 1;
FIG. 3 is a cross-sectional view illustrating the first headstock and the first spindle illustrated in FIG. 1 cut along a horizontal plane passing the axis of the first spindle and seen from the above;
FIG. 4 is an enlarged view of the first spindle and a rotary transmitting member illustrated in FIG. 3;
FIG. 5 is a perspective cross-sectional view illustrating part of a non-rotary transmitting member and the rotary transmitting member by cutting part of the first headstock illustrated in FIG. 1;
FIG. 6 is a perspective cross-sectional view illustrating part of a shifter lever illustrated in FIG. 5 cut along an extending direction of the shifter lever;
FIG. 7 is a view illustrating the shifter lever illustrated in FIG. 5 seen from a rear end side of the spindle;
FIG. 8 is a control block diagram of the NC lathe illustrated in FIG. 1;
FIG. 9 is a graph showing an example of a strain of the shifter lever detected by strain detection means when the first spindle illustrated in FIG. 1 changes the state from a release state to a gripping state;
FIG. 10 is a flowchart illustrating an automatic adjustment operation of a gripping force of the first spindle illustrated in FIG. 1; and
FIG. 11A is a schematic diagram illustrating a positional relationship between a force received by the shifter lever illustrated in FIG. 5 and a swing center, and FIG. 11B is a schematic diagram illustrating the shifter lever according to a modified example and a positional relationship between a force received by the shifter lever according to the modified example and the swing center.

### DETAILED DESCRIPTION

An embodiment of the present invention will be described below with reference to the drawings. The present embodiment will be described with reference to an example where the present invention is applied to a Swiss-type Numerical Control (NC) lathe. That is, the NC lathe to be described below corresponds to an example of a machine tool.

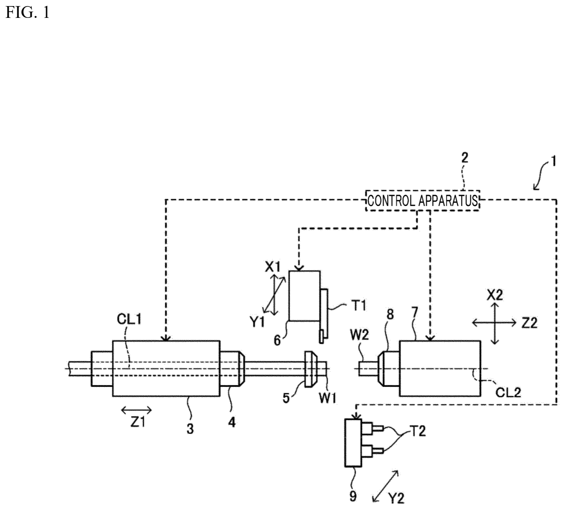

FIG. 1 is a plan view briefly illustrating an internal configuration of an NC lathe 1 according to the present embodiment.

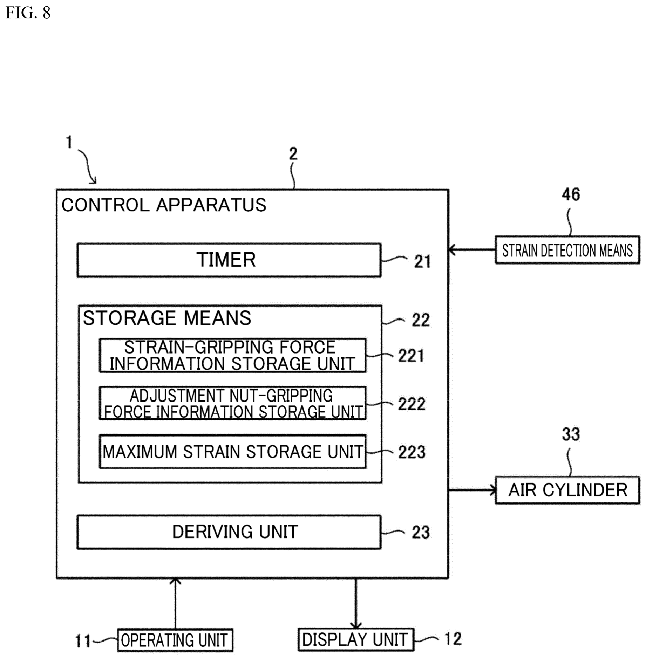

As illustrated in FIG. 1, the NC lathe 1 is internally provided with a control apparatus 2, a first headstock 3, a first spindle 4, a guide bush 5, a first tool post 6, a second headstock 7, a second spindle 8, and a second tool post 9. The control apparatus 2 is a computer that causes the first headstock 3, the first spindle 4, the first tool post 6, the second headstock 7, the second spindle 8, and the second tool post 9 to operate according to an NC program. Note that, by performing an operation using the NC program, or directly inputting a command from an operating unit 11 (see FIG. 8) to the control apparatus 2, it is possible to cause the NC lathe 1 to operate.

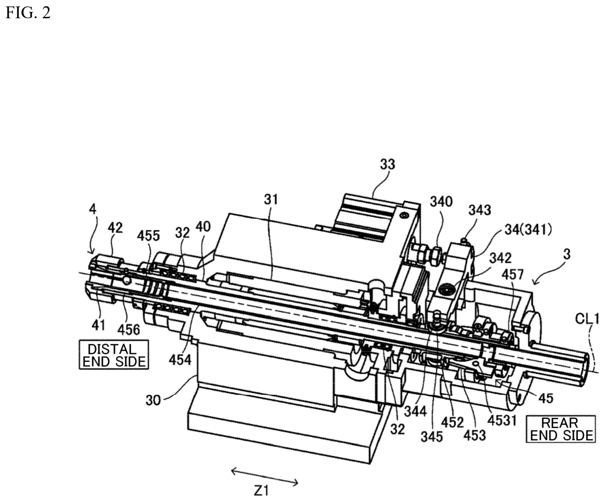

The first headstock 3 moves in a Z1-axis direction together with the first spindle 4 according to a signal from the control apparatus 2. The Z1-axis direction is a horizontal direction, and is a left/right direction in FIG. 1. The first spindle 4 is rotatably supported in the first headstock 3. Furthermore, the first headstock 3 is provided with a first spindle motor 31 (see FIG. 2) between the first headstock 3 and the first spindle 4. When this first spindle motor 31 receives the signal from the control apparatus 2 and rotates, the first spindle 4 rotates about a first axis CL1. This first axis CL1 corresponds to an example of an axis. The direction of the first axis CL1 matches with the Z1-axis direction.

The first spindle 4 changes a state between a gripping state where the first spindle 4 grips an elongated, bar-shaped workpiece W1 inserted into the first spindle 4, and a release state where the first spindle 4 releases the grip of the workpiece W1. This first spindle 4 corresponds to an example of a spindle. The workpiece W1 gripped by the first spindle 4 rotates about the first axis CL1 together with the first spindle 4 when the first spindle 4 rotates. The configurations of the first headstock 3 and the first spindle 4 will be described in detail later.

The guide bush 5 is fixed to the interior of the NC lathe 1. The guide bush 5 supports a distal end portion of the workpiece W1 protruding from the first spindle 4 slidably in the Z1-axis direction. The portion of this guide bush 5 that supports the workpiece W1 can rotate about the first axis CL1 in synchronization with the first spindle 4. In other words, the first axis CL1 is also the rotation axis of the portion of the workpiece W1 that is supported by the guide bush 5. The guide bush 5 is provided and suppresses warp of the workpiece W1 at a time of machining, so that it is possible to accurately machine the long and thin workpiece W1 in particular.

The first tool post 6 is movable in an X1-axis direction that is perpendicular to the Z1-axis direction and is directed to the horizontal direction, and a Y1-axis direction that is directed to a vertical direction. The first tool post 6 moves in the X1-axis direction and the Y1-axis direction upon reception of a signal from the control apparatus 2. In FIG. 1, the upper/lower direction is the X1-axis direction, and a direction that is perpendicular to the paper surface is the Y1-axis direction. First spindle tools T1 for machining the workpiece W1 are attached to the first tool post 6. FIG. 1 illustrates that the first spindle tools T1 have been attached to the first tool post 6. A plurality of types of the first spindle tools T1 including a cutting tool for outer diameter machining, a cutting tool for cut-off machining, and the like are attached to the first tool post 6 side by side in the Y1-axis direction. When the first tool post 6 moves in the Y1-axis direction, the arbitrary first spindle tool T1 is selected from the plurality of these types of first spindle tools T1. Furthermore, when the first tool post 6 moves in the X1-axis direction, the selected first spindle tool T1 cuts into the workpiece W1 gripped by the first spindle 4 to machine the workpiece W1.

The second headstock 7 moves in an X2-axis direction and a Z2-axis direction together with the second spindle 8 according to a signal from the control apparatus 2. The X2-axis direction is the same direction as the X1-axis direction described above, and the Z2-axis direction is the same direction as the Z1-axis direction described above. An unillustrated second spindle motor such as a built-in motor is provided to the second headstock 7. When this second spindle motor receives the signal from the control apparatus 2 and rotates, the second spindle 8 rotates about a second axis CL2. This second axis CL2 also corresponds to an example of the axis. The direction of the second axis CL2 matches with the Z2-axis direction.

A cut workpiece W2 that has been machined using the first spindle 4 and cut by the cutting tool for cut-off machining is passed to the second spindle 8. The second spindle 8 changes a state between a gripping state where the second spindle 8 grips the cut workpiece W2 passed from the first spindle 4, and a release state where the second spindle 8 releases the grip of the cut workpiece W2. This second spindle 8 also corresponds to an example of a spindle. The cut workpiece W2 gripped by the second spindle 8 rotates about the second axis CL2 together with the second spindle 8 when the second spindle 8 rotates.

The second tool post 9 moves in a Y2-axis direction in response to a signal from the control apparatus 2. This Y2-axis direction is the same direction as the above-described Y1-axis direction, that is, the vertical direction. A plurality of second spindle tools T2 that machine the cut workpiece W2 gripped by the second spindle 8 are attached to the second tool post 9. FIG. 1 illustrates that the second spindle tools T2 are attached to the second tool post 9. The plurality of types of second spindle tools T2 such as a drill and an endmill are attached to the second tool post 9. Although not illustrated in FIG. 1, the second spindle tools T2 are attached side by side not only in the X2-axis direction but also in the Y2-axis direction. When the second headstock 7 moves in the X2-axis direction and the second tool post 9 moves in the Y2-axis direction, the arbitrary second spindle tool T2 is selected from the plurality of these types of second spindle tools T2. Furthermore, when the second headstock 7 moves in the Z2-axis direction, a cut end side portion of the cut workpiece W2 gripped by the second spindle 8 is machined.

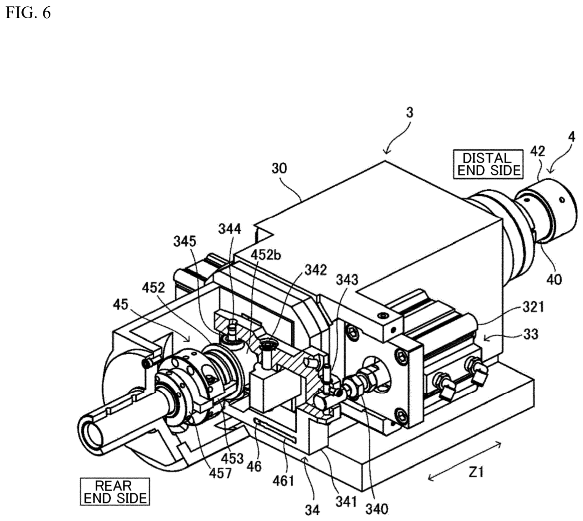

FIG. 2 is a perspective cross-sectional view of the partially cut first headstock 3 and first spindle 4 illustrated in FIG. 1. This FIG. 2 illustrates the first headstock 3 and the first spindle 4 from which a 90-degree portion on the front upper side in FIG. 2 has been cut out. Note that, in the drawings used to describe the present embodiment, no hatching indicating the cross-section is applied except for the cross section of a shifter lever 341 in FIG. 6 to be described later.

As illustrated in FIG. 2, the first headstock 3 includes a first headstock main body 30, the first spindle motor 31, and a bearing 32. The first headstock main body 30 is a base member of the first headstock 3, and is a moving body that moves in the Z1-axis direction by an unillustrated Z1 axis motor. The first spindle motor 31 is a built-in motor provided to the first headstock main body 30. The bearing 32 rotatably supports the first spindle 4. As described above, by rotating and driving the first spindle motor 31, the first spindle 4 rotates about the first axis CL1 via the bearing 32.

Furthermore, an air cylinder 33 is attached to the first headstock 3. Furthermore, a non-rotary transmitting member 34 is attached to the first headstock 3. This non-rotary transmitting member 34 includes a piston rod 340, the shifter lever 341, a lever shaft 342, a connection pin 343, an action shaft 344, and an action bearing 345. The configurations of the air cylinder 33 and the non-rotary transmitting member 34 will be described in detail later.

The first spindle 4 includes a spindle main body 40, a collet chuck 41, and a spindle cap 42. Furthermore, a rotary transmitting member 45 is attached to the first spindle. The rotary transmitting member 45 includes a shifter 452, claw members 453, a push sleeve 454, a coil spring 455, a chuck sleeve 456 and an adjustment nut 457. This rotary transmitting member 45 transmits a driving force received from the non-rotary transmitting member 34 to the collet chuck 41 to reduce or expand the diameter of the collet chuck 41. The spindle main body 40 is a base member of the first spindle 4, and is a cylindrical body that extends in the Z1-axis direction. The collet chuck 41, the spindle cap 42, and the rotary transmitting member 45 rotate about the first axis CL1 as a rotation center together with the spindle main body 40.

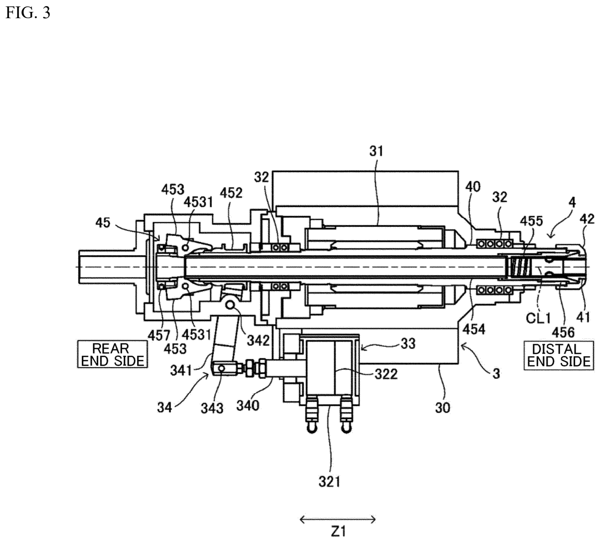

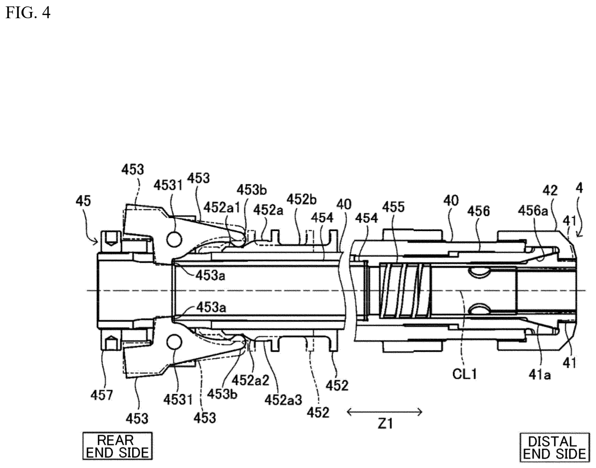

FIG. 3 is a cross-sectional view of the first headstock 3 and the first spindle 4 illustrated in FIG. 1 cut along a horizontal plane passing the first axis CL1 and seen from above. Furthermore, FIG. 4 is an enlarged view of the first spindle 4 and the rotary transmitting member 45 illustrated in FIG. 3. Solid lines in these FIG. 3 and FIG. 4 indicate the first headstock 3 and the first spindle 4 in the release state. Furthermore, in FIG. 3 and FIG. 4, the left side of the figures is the rear end side of the first spindle 4, and the right side of the figures is the distal end side of the first spindle 4. Note that the direction toward the distal end side and the direction toward the rear end side match with the Z1-axis direction.

As illustrated in FIG. 4, the collet chuck 41 is configured to be able to expand and reduce the diameter in a radial direction perpendicular to the first axis CL1. This collet chuck 41 corresponds to an example of a gripping unit. A distal end part outer circumferential surface 41a of the collet chuck 41 is a tapered surface whose diameter increases toward the distal end side. The collet chuck 41 includes three slots formed thereon in total every 120°, continuing from the distal end to a hole formed in the vicinity of the center in the Z1-axis direction, and separated in a circumferential direction. These hole and slots make it possible to expand and reduce the diameter of the distal end side of the collet chuck 41 in particular in the radial direction. The solid lines in FIG. 3 and FIG. 4 indicate the diameter of the collet chuck 41 has been expanded. Furthermore, a two-dot chain line in FIG. 4 indicates that the diameter of the collet chuck 41 has been reduced. When the diameter of the collet chuck 41 is reduced, the first spindle 4 is brought into the gripping state, and, when the diameter of the collet chuck 41 is expanded, the first spindle 4 is brought into the release state.

The spindle cap 42 is disposed on the distalmost end side of the first spindle 4. The spindle cap 42 is a spindle cap of a bowl shape including a circular cap through-hole formed at a center portion and penetrating in the Z1-axis direction. When a distal end surface of the collet chuck 41 comes into contact with a portion corresponding to a bottom part of this bowl shape, the spindle cap 42 regulates movement of the collet chuck 41 toward the distal end side. The collet chuck 41 is pushed by the coil spring 455 and thereby pressed against the spindle cap 42 at all times. The spindle cap 42 is fixed to the spindle main body 40 when a female screw part formed on an inner side of an edge part of this bowl shape enmeshes with a male screw part formed at a distal end portion of the spindle main body 40.

The shifter 452 is disposed on the outer side of the spindle main body 40. The shifter 452 has a generally cylindrical shape, and is attached to the spindle main body 40 such that the shifter 452 is slidably movable in the Z1-axis direction when an inner circumferential surface thereof comes into sliding contact with the outer circumferential surface of the spindle main body 40. As illustrated in FIG. 4, a cam surface 452a and a groove 452b are formed on the outer circumferential surface of the shifter 452. The cam surface 452a includes a small diameter surface 452a1 that is the smallest and has a constant outer diameter, a changing surface 452a2 whose outer diameter gradually becomes larger, and a large diameter surface 452a3 that is the largest and has a constant outer diameter in order from the rear end side of the first spindle 4. This shifter 452 slides and moves in the Z1-axis direction by the driving force of the air cylinder 33 (see FIG. 2) whose operation is controlled by the control apparatus 2 (see FIG. 1). Solid lines in FIG. 3 and FIG. 4 indicate that the shifter 452 is positioned on the distalmost end side of the first spindle 4. Furthermore, a two-dot chain line in FIG. 4 indicates that the shifter 452 is positioned on the rearmost end side of the first spindle 4. The position of the shifter 452 indicated by this two-dot chain line is a first position, and the position of the shifter 452 indicated by the solid line is a second position.

The two claw members 453 are attached to the spindle main body 40. The claw members 453 are rotatable about claw shafts 4531 within a predetermined angle range. A claw distal end portion 453b that acts as a cam follower in contact with the cam surface 452a of the shifter 452 is formed at the distal end portion of the claw member 453. The claw distal end portion 453b approaches or moves away from the first axis CL1 along the cam surface 452a in response to sliding movement of the shifter 452, and the claw member 453 pivots about the claw shaft 4531 as the pivot center. A sleeve push part 453a is formed on the claw member 453, and this sleeve push part 453a is in contact with the rear end of the push sleeve 454.

The push sleeve 454 is a cylindrical body disposed inside of the spindle main body 40, and the distal end thereof is in contact with a rear end portion of the chuck sleeve 456. The push sleeve 454 and the chuck sleeve 456 move in a direction opposite to the shifter 452 when the shifter 452 moves in the Z1-axis direction. More specifically, when the shifter 452 slides and moves to the rear end side of the first spindle 4, the claw distal end portion 453b of the claw member 453 is pushed up by the cam surface 452a of the shifter 452, and moves in a direction away from the first axis CL1. Thus, the claw member 453 on the upper side in FIG. 4 rotates counterclockwise about the claw shaft 4531 as the rotation center, the claw member 453 on the lower side in FIG. 4 rotates clockwise, and the push sleeve 454 and the chuck sleeve 456 are pushed by the sleeve push part 453a of the claw member 453 to move toward the distal end side of the first spindle 4. A two-dot chain line in FIG. 4 indicates that the claw distal end portion 453b of the claw member 453 has moved away from the first axis CL1. The posture of the claw member 453 indicated by this two-dot chain line is the first posture, and the posture of the claw member 453 indicated by the solid line is the second posture.

In a process in which the claw distal end portion 453b is pushed up by the cam surface 452a of the shifter 452, the collet chuck 41 is in a state where the diameter is reduced the most, and the first spindle 4 is in the gripping state at a moment when a contact point between the claw distal end portion 453b and the cam surface 452a reaches a boundary point between the change surface 452a2 and the large diameter surface 452a3. Furthermore, at this moment, a force transmitted from the air cylinder 33 (see FIG. 3) to the collet chuck 41 becomes the greatest. When the workpiece W1 (see FIG. 1) is in the collet chuck 41, the force at this time has a correlation with the gripping force of the collet chuck 41 for gripping the workpiece W1, and, as the force at this time becomes greater, the gripping force also becomes greater. Note that, when the contact point between the claw distal end portion 453b and the cam surface 452a is beyond the boundary point between the change surface 452a2 and the large diameter surface 452a3 and on the large diameter surface 452a3, the gripping state of the first spindle 4 is kept.

Conversely, when the shifter 452 slides and moves toward the distal end side of the first spindle 4, the distal end portion 453b of the claw member 453 moves along the cam surface 452a of the shifter 452 in a direction to approach the first axis CL1. Thus, the claw member 453 on the upper side in FIG. 4 rotates clockwise about the claw shaft 4531 as the rotation center, the claw member 453 on the lower side in FIG. 4 rotates counterclockwise, and the push sleeve 454 and the chuck sleeve 456 move toward the rear end side of the first spindle 4. Furthermore, the collet chuck 41 is in a state where the diameter is expanded. A solid line in FIG. 4 indicates that the claw member 453 on the upper side rotates clockwise and the claw member 453 on the lower side rotates counterclockwise.

The coil spring 455 pushes the chuck sleeve 456 toward the rear end side at all times, and pushes the collet chuck 41 toward the distal end side at all times. Thus, the push sleeve 454 is also pushed toward the rear end side via the chuck sleeve 456, and the rear end of the push sleeve 454 pushes the sleeve push part 453a toward the rear end side.

The distal end part inner circumferential surface 456a of the chuck sleeve 456 is a tapered surface whose diameter becomes larger toward the distal end side. Since the chuck sleeve 456 is positioned on the rear end side in the release state indicated by solid lines in FIG. 3 and FIG. 4, there is little force of the distal end part inner circumferential surface 456a of the chuck sleeve 456 for pushing the distal end part outer circumferential surface 41a of the collet chuck 41 toward the inside in the radial direction, and the diameter on the distal end side of the collet chuck 41 is expanded by own elasticity. On the other hand, since the chuck sleeve 456 is positioned on the distal end side in the gripping state indicated by two-dot chain lines in FIG. 3 and FIG. 4, when the distal end part inner circumferential surface 456a of the chuck sleeve 456 pushes the distal end part outer circumferential surface 41a of the collet chuck 41 toward the inside in the radial direction, the diameter on the distal end side of the collet chuck 41 is reduced.

The adjustment nut 457 is disposed at a rear end portion of the first spindle 4. This adjustment nut 457 corresponds to an example of adjustment means. A female screw is formed on the inner side of the adjustment nut 457, and this female screw enmeshes with a male screw formed at the rear end portion of the spindle main body 40. By rotating the adjustment nut 457 in a direction to fasten, the claw member 453, the push sleeve 454, and the chuck sleeve 456 move toward the distal end side of the first spindle 4 together with the adjustment nut 457. Thus, the inner diameter of the collet chuck 41 in the gripping state becomes relatively small, and the gripping force of the first spindle 4 for the workpiece W1 becomes high. On the other hand, by rotating the adjustment nut 457 in a direction to unfasten, the claw member 453, the push sleeve 454, and the chuck sleeve 456 move toward the rear end side of the first spindle 4 together with the adjustment nut 457. Thus, the inner diameter of the collet chuck 41 in the gripping state becomes relatively large, and the gripping force of the first spindle 4 for the workpiece W1 becomes low.

The adjustment nut 457 has a C shape having a cutout along the radial direction when seen from the rear end side to the distal end side of the first spindle 4, and the width of this cutout portion can be changed by an unillustrated fixing screw. After adjusting the gripping force using the adjustment nut 457 is completed, the adjustment nut 457 is fixed to the spindle main body 40 at an adjusted position by narrowing the cutout portion by this fixing screw. Furthermore, an unillustrated nut rotation inhibition apparatus that inhibits rotation of the adjustment nut 457 is also attached to the first headstock 3. By designating an angle and rotating the first spindle 4 in a state where the screw for narrowing the cutout portion of the adjustment nut 457 is unfastened and the nut rotation inhibition apparatus inhibits rotation of the adjustment nut 457, the adjustment nut 457 can be positioned at a desired rotation angle position with respect to the first spindle 4. That is, the nut rotation inhibition apparatus inhibits rotation and the first spindle 4 rotates, so that it is possible to automatically adjust the gripping force of the first spindle 4 for the workpiece W1. Note that the gripping force of the first spindle 4 for the workpiece W1 may be configured to be adjusted using adjustment means other than the adjustment nut 457.

As illustrated in FIG. 3, the air cylinder 33 includes a cylinder tube 321 and a piston 322. This air cylinder 33 corresponds to an example of an actuator. Note that a hydraulic cylinder such as a hydraulic cylinder or a motor may be used in place of the air cylinder 33. The cylinder tube 321 is a housing for the air cylinder 33 and has a cylindrical shape. The piston 322 is disposed in the cylinder tube 321 so as to be movable in contact with the inner circumferential surface of the cylinder tube 321 to one side and the other side. This piston 322 is driven by air supplied to the air cylinder 33 and moves to the rear end side and the distal end side in the cylinder tube 321. FIG. 3 illustrates that the piston 322 is positioned at the rearmost end side.

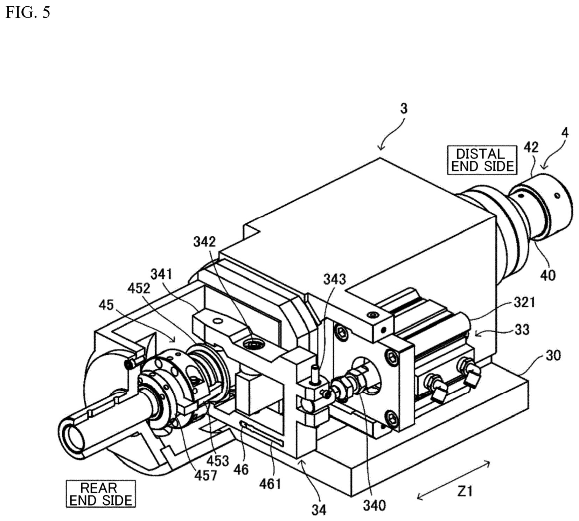

FIG. 5 is a perspective cross-sectional view illustrating part of the non-rotary transmitting member 34 and the rotary transmitting member 45 by cutting part of the first headstock 3 illustrated in FIG. 1. Furthermore, FIG. 6 is a perspective cross-sectional view of part of the shifter lever 341 illustrated in FIG. 5 cut along the extending direction of the shifter lever 341. Note that FIG. 6 illustrates a cross-sectional surface of the shifter lever 341 with a hatching.

As described above, the non-rotary transmitting member 34 includes the piston rod 340, the shifter lever 341, the lever shaft 342, the connection pin 343, the action shaft 344 (see FIG. 6), and the action bearing 345 (see FIG. 6). The piston rod 340 has a bar shape whose one end is fixed to the piston 322 (see FIG. 3). As illustrated in FIG. 5, the other end of the piston rod 340 is connected to the shifter lever 341 with the connection pin 343 interposed therebetween. The piston rod 340 is driven by the piston 322, and changes a state between an advanced state where the piston rod 340 advances from the cylinder tube 321 toward the rear end side and a retreated state where the piston rod 340 retreats toward the distal end side. That is, the driving force of the air cylinder 33 is transmitted to the piston rod 340, and acts as an advancing/retreating operation of the piston rod 340.

The shifter lever 341 is swingable about the lever shaft 342 fixed to the first headstock main body 30 as a swing center. That is, an axial center axis of this lever shaft 342 is the swing center axis of the shifter lever 341. The connection pin 343 is fixed to one end portion of the shifter lever 341. The one end portion of the shifter lever 341 and the other end portion of the piston rod 340 are pivotably connected by this connection pin 343. Thus, the driving force of the air cylinder 33 is transmitted to the shifter lever 341 via the connection pin 343. A contact portion of the shifter lever 341 with the connection pin 343 is a force reception portion at which the shifter lever 341 receives the driving force from the air cylinder 33.

As illustrated in FIG. 6, the action shaft 344 is fixed to the other end portion of the shifter lever 341, and the action bearing 345 is attached to this action shaft 344. This action bearing 345 fits into the groove 452b of the shifter 452. Thus, the driving force transmitted from the air cylinder 33 to the shifter lever 341 via the connection pin 343 is transmitted to the shifter 452. That is, when the air cylinder 33 is driven, the shifter lever 341 swings, and this swing causes the shifter 452 to slide and move in the Z1-axis direction. The axial center axis of the action shaft 344 and the center axis of the action bearing 345 match with each other. When the shifter lever 341 transmits the driving force to the shifter 452, a reaction force acts on the shifter lever 341 from the shifter 452 via the action bearing 345 and the action shaft 344. A contact portion of the shifter lever 341 with the action shaft 344 is an action portion. A distance from the axial center axis of the lever shaft 342 that is the swing center axis of the shifter lever 341 to the axial center axis of the connection pin 343 is longer than a distance from the axial center axis of the lever shaft 342 to the axial center axis of the action shaft 344. Accordingly, the shifter lever 341 corresponds to an example of a booster mechanism (lever mechanism) for increasing the driving force transmitted from the piston rod 340 and transmitting the driving force to the shifter 452. The above-described non-rotary transmitting member 34 and rotary transmitting member 45 constitute a driving force transmission mechanism that transmits the driving force from the air cylinder 33 to the collet chuck 41 (see FIG. 3).

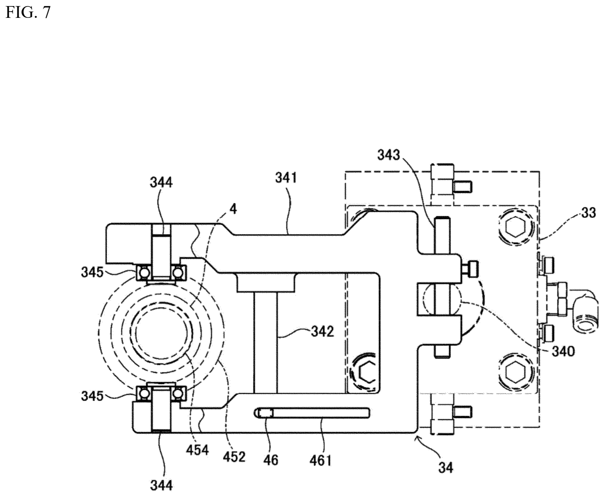

FIG. 7 is a view of the shifter lever 341 illustrated in FIG. 5 seen from the rear end side of the spindle. Note that two-dot chain lines in FIG. 7 indicate the first spindle 4, the piston rod 340, the shifter 452, the push sleeve 454, and the air cylinder 33.

As illustrated in FIG. 7, the shifter lever 341 has a substantially U shape seen from the rear end side. The above-described action shaft 344 and action bearing 345 are disposed at the other end portions separated to upper and lower sides of the shifter lever 341 plane-symmetrically with respect to the horizontal direction. Furthermore, strain detection means 46 is attached to the side surface on the rear end side (the front side in FIG. 7) of the shifter lever 341. Note that the strain detection means 46 may be attached to the side surface on the distal end side (the back side in in FIG. 7) of the shifter lever 341.

The strain detection means 46 is a so-called strain gauge that detects a strain produced in the shifter lever 341 when the driving force of the air cylinder 33 is transmitted from the air cylinder 33 to the collet chuck 41. The strain detection means 46 is connected with a signal line 461. A signal of the strain detected by the strain detection means 46 is transmitted to the control apparatus 2 (see FIG. 1) through the signal line 461.

The strain detection means 46 detects the strain of the shifter lever 341 produced at a portion at which the strain detection means 46 is attached. The strain detection means 46 is attached to a portion that overlaps the axial center axis of the lever shaft 342 seen from the Z1-axis direction (a direction perpendicular to FIG. 7). The strain detection means 46 is preferably disposed between a contact portion that is the force reception portion at which the shifter lever 341 receives the driving force and that is between the shifter lever 341 and the connection pin 343, and a contact portion that is an action portion at which the reaction force from the shifter 452 acts on the shifter lever 341 and that is between the shifter lever 341 and the action shaft 344. By disposing the strain detection means 46 between the force reception portion and the action portion, it is possible to accurately detect the strain produced in the shifter lever 341 when the shifter lever 341 receives the driving force from the air cylinder 33. Furthermore, in the configuration where the axial center axis of the lever shaft 342 is positioned between the force reception portion and the action portion as in the present embodiment, it is more preferable to attach the strain detection means 46 to a portion at which the distance from the axial center axis of the lever shaft 342 is shorter than the distance from the above-described force reception portion and action portion, and it is more preferable to attach the strain detection means 46 to a portion overlapping the axial center axis of the lever shaft 342. This is because, when the shifter lever 341 receives the driving force from the air cylinder 33, the greatest strain occurs near the axial center axis of the lever shaft 342, so that the strain detection means 46 can more accurately detect the strain by shortening the distance from the axial center axis of the lever shaft 342.

Furthermore, it is preferable to attach the strain detection means 46 to the side surface of the shifter lever 341 formed in parallel to the axial center axis of the lever shaft 342. The center in the thickness direction (Z1-axis direction) of the shifter lever 341 is provided with a neutral surface that does not extend and contract even when the shifter lever 341 receives the driving force from the air cylinder 33. Furthermore, this is because the greatest strain is produced on the side surface apart from this neutral surface, so that the strain detection means 46 can accurately detect the strain by attaching the strain detection means 46 to this side surface. In other words, it can be also said that it is preferable to attach the strain detection means 46 to the side surface parallel to the neutral surface of the shifter lever 341.

FIG. 8 is a control block diagram of the NC lathe 1 illustrated in FIG. 1. Note that, although FIG. 8 illustrates only a control configuration that is particularly highly relevant to the present embodiment, the control apparatus 2 executes control for all components of the NC lathe 1.

As illustrated in FIG. 8, the NC lathe 1 includes the operating unit 11 and a display unit 12 as interfaces for an operator. The operating unit 11 is an input apparatus for operating the NC lathe 1. The operating unit 11 includes a plurality of buttons, keys, and the like for accepting input operations performed by the operator of the NC lathe 1. Note that the operating unit 11 may be also a touch panel that is integrated with the display unit 12. The display unit 12 is a display that displays various information related to the NC lathe 1 such as the NC program, various setting values, error contents, and a deriving result of a deriving unit 23 to be described later.

The control apparatus 2 includes a timer 21, storage means 22, and the deriving unit 23. The timer 21 is used to measure an elapsed time from start of measurement. The timer 21 measures, for example, an elapsed time after the NC lathe 1 is powered on, and an elapsed time from a point of time at which a predetermined operation is started.

The storage means 22 stores a control program, the NC program, various information, and the like, and includes a non-volatile memory and a volatile memory. Furthermore, the storage means 22 includes a strain-gripping force information storage unit 221, an adjustment nut-gripping force information storage unit 222, and a maximum strain storage unit 223.

A correlation between the magnitude of the strain detected by the strain detection means 46 and the gripping force of the collet chuck 41 is stored in the strain-gripping force information storage unit 221. A correlation between the rotation angle of the adjustment nut 457 and the gripping force of the collet chuck 41 is stored in the adjustment nut-gripping force information storage unit 222. A maximum strain that is a maximum value of the strain detected by the strain detection means 46 while a predetermined time passes after a gripping command (close command) for the collet chuck 41 is issued is stored in the maximum strain storage unit 223. Note that the predetermined time is set to a time that is sufficient to change the state to the gripping state after the gripping command of the collet chuck 41 is issued to the first spindle 4 in the release state. Whether or not the predetermined time has passed is measured by the timer 21. This predetermined time is set by a manufacturer of the NC lathe 1, yet may be changed by an operator's input. Alternatively, instead of the predetermined time, the air cylinder 33 illustrated in FIG. 3 may be provided with a sensor that detects that the piston 322 or the piston rod 340 has reached a stroke end, and a time taken until an arrival signal to this sensor is sent may be measured.

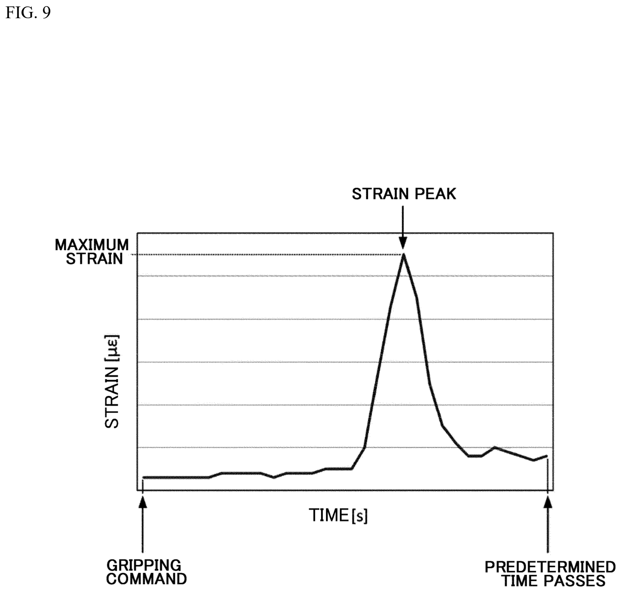

FIG. 9 is a graph showing an example of the strain of the shifter lever 341 detected by the strain detection means 46 when the first spindle 4 illustrated in FIG. 1 changes the state from the release state to the gripping state. Hereinafter, referring to FIG. 4 and FIG. 9, an operation of deriving the gripping force of the collet chuck 41 will also be described with reference to FIG. 8.

When the gripping command is issued to the first spindle 4 in the release state, the air cylinder 33 starts driving under control of the control apparatus 2. Then, the driving force of the air cylinder 33 is transmitted to the shifter lever 341 (see FIG. 3), the shifter lever 341 swings, and the shifter 452 moves toward the rear end side. Furthermore, the claw distal end portion 453b of the claw member 453 is pushed up by the cam surface 452a of the shifter 452. At this time, the reaction force from the shifter 452 side and the driving force from the air cylinder 33 resulting from transfer resistance of the shifter 452 are applied to the shifter lever 341, and thereby produce a strain in the shifter lever 341, and the strain detected by the strain detection means 46 increases as illustrated in FIG. 9. When the contact point between the claw distal end portion 453b and the cam surface 452a reaches a boundary point between the change surface 452a2 and the large diameter surface 452a3, the strain of the shifter lever 341 becomes a maximum strain, and when the claw distal end portion 453b goes beyond this boundary point, the strain of the shifter lever 341 decreases. As described above, the collet chuck 41 is in the state where the diameter is reduced the most at the moment when the contact point between the claw distal end portion 453b and the cam surface 452a reaches this boundary point, and the first spindle 4 is in the gripping state.

The control apparatus 2 receives the strain detected by the strain detection means 46 and executes the following processing every, for example, tens of µ seconds. The control apparatus 2 causes the maximum strain storage unit 223 to store a firstly detected strain after the gripping command is issued to the first spindle 4 in the release state. Furthermore, thereafter, the strain stored in the maximum strain storage unit 223 and the strain detected this time by the strain detection means 46 are compared, and, if the strain detected this time is greater, the control apparatus 2 performs processing of overwriting a value of the strain stored in the maximum strain storage unit 223. On the other hand, if the strain detected this time by the strain detection means 46 is less than the strain stored in the maximum strain storage unit 223, the value of the strain stored in the maximum strain storage unit 223 is kept as it is. By repeating this processing by a predetermined time after the gripping command is issued to the first spindle 4, the maximum strain is stored in the maximum strain storage unit 223. Note that, if the strain detected this time by the strain detection means 46 is less than the strain stored in the maximum strain storage unit 223, since the strain stored in the maximum strain storage unit 223 at this point of time is likely to be the maximum strain, the control apparatus 2 may stop the processing without waiting for the predetermined time to pass. By so doing, it is possible to reduce the load of the control apparatus 2.

When the maximum strain is stored in the maximum strain storage unit 223, the deriving unit 23 derives the gripping force of the collet chuck 41 for the workpiece W1 (see FIG. 1) based on the maximum strain stored in the maximum strain storage unit 223 from the relationship between the strain and the gripping force stored in the strain-gripping force information storage unit 221. Furthermore, the deriving unit 23 causes the display unit 12 to display the value of the derived gripping force. This operation of this deriving unit 23 is executed every time the state of the first spindle 4 is changed to the gripping state even during execution of continuous machining of executing not only the setup work but also repeated machining by the same operation using the NC program. This change of the state is usually executed between machining and machining during continuous machining. In this regard, the operation of the deriving unit 23 may be executed only during the setup work or only during continuous machining. Furthermore, the operator may be allowed to select whether or not to execute the operation of the deriving unit 23 during execution of each of the setup operation and the continuous machining.

Next, an operation of automatically adjusting the gripping force during the setup work will be described.

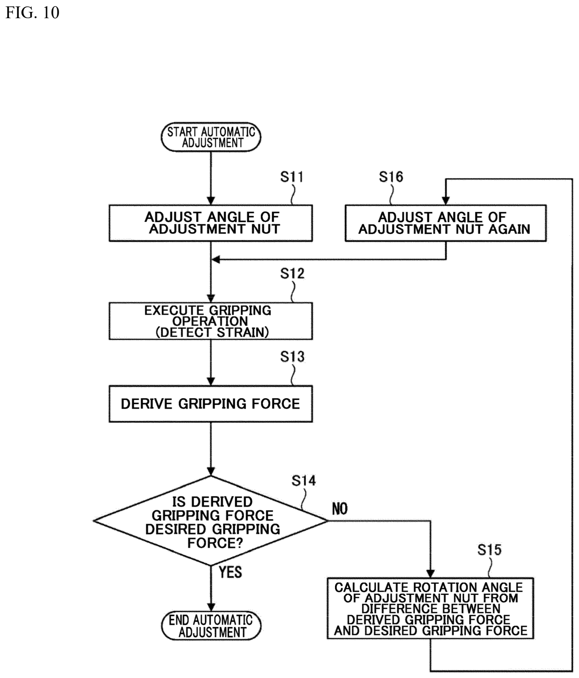

FIG. 10 is a flowchart illustrating an operation of automatically adjusting the gripping force of the first spindle 4 illustrated in FIG. 1. Note that the automatic adjustment operation illustrated in this FIG. 10 is an operation executed under control of the control apparatus 2.

The operator of the NC lathe 1 inputs a desired gripping force to the control apparatus 2 using the operating unit 11 prior to the automatic adjustment operation. Furthermore, the operator of the NC lathe 1 inserts the workpiece W1 into the collet chuck 41 by bringing the first spindle 4 into the release state using the operating unit 11. Furthermore, an unillustrated fixing screw for fixing the adjustment nut 457 to the first spindle 4 is unfastened to enable the adjustment nut 457 to relatively rotate with respect to the first spindle 4. After these preparation work is completed, the automatic adjustment operation of the gripping force is executed.

As illustrated in FIG. 10, when automatic adjustment is started, the control apparatus 2 operates the unillustrated nut rotation inhibition apparatus, then rotates the first spindle 4, and returns the adjustment nut 457 to the initial position. This initial position is a position at which the gripping force of the collet chuck 41 is the weakest. Next, the control apparatus 2 extracts such a rotation angle of the adjustment nut 457 that a gripping force becomes the desired gripping force input in advance from the correlation between the rotation angle of the adjustment nut 457 and the gripping force of the collet chuck 41 stored in the adjustment nut-gripping force information storage unit 222, and relatively rotates the first spindle 4 and the adjustment nut 457 by this rotation angle (step S11). Note that the current rotation angle of the adjustment nut 457 may be stored in the storage means 22, and the adjustment nut 457 may be rotated by a difference between this current rotation angle and the rotation angle at which the desired gripping force is achieved.

Next, the control apparatus 2 issues the gripping command to the first spindle 4, and changes the state of the first spindle 4 from the release state to the gripping state while executing the above-described processing of causing the maximum strain storage unit 223 to store the strain detected by the strain detection means 46 (step S12).

When the state change is completed, the deriving unit 23 derives the gripping force of the collet chuck 41 for the workpiece W1 from the relationship between the strain and the gripping force stored in the strain-gripping force information storage unit 221 based on the maximum strain obtained at the time of the state change executed in step S12 (step S13).

Furthermore, the deriving unit 23 determines whether or not the derived gripping force matches with the desired gripping force input by the operator (step S14). When it is determined in step S14 that the gripping forces do not match, an additional rotation angle of the adjustment nut 457 that is necessary to eliminate a difference between the gripping force derived in step S13 and the desired gripping force is calculated from the correlation between the rotation angle of the adjustment nut 457 and the gripping force of the collet chuck 41 stored in the adjustment nut-gripping force information storage unit 222 (step S15).

Furthermore, the control apparatus 2 relatively rotates the first spindle 4 and the adjustment nut 457 by the additional rotation angle calculated in step S15 after bringing the first spindle 4 into the release state (step S16). When step S16 is completed, the processing returns to step S12 to change the state of the first spindle 4 to the gripping state again while executing the above-described operation of causing the maximum strain storage unit 223 to store the strain.

On the other hand, when it is determined in step S14 that the gripping forces match, the operation of the nut rotation inhibition apparatus is deactivated to end the automatic adjustment operation. Thereafter, the operator of the NC lathe 1 fastens the unillustrated fixing screw to prevent the adjustment nut 457 from relatively rotating with respect to the first spindle 4 to maintain the desired gripping force.

According to the NC lathe 1 according to the above-described present embodiment, the gripping force of the collet chuck 41 is derived on the basis of the detection result of the strain detection means 46 attached to the non-rotary transmitting member 34, so that it is possible to transmit the detection result of the strain detection means 46 to the control apparatus 2 with a low-cost configuration compared to the case where the strain detection means 46 is attached to the rotary transmitting member 45. Furthermore, the gripping force of the collet chuck 41 is derived on the basis of the detection result of the strain detection means 46, so that it is possible to accurately derive the gripping force of the collet chuck 41 without causing variations between operators. Furthermore, it is possible to derive the gripping force every time the workpiece W1 is gripped not only at the time of the setup work but also during execution of the continuous machining that uses the NC program, so that it is possible to recognize that the gripping force has changed due to change over time or aging over time has occurred.

Furthermore, the strain detection means 46 is attached to the shifter lever 341 positioned on the downstream side of the transmission path of the driving force in the non-rotary transmitting member 34, so that an influence of disturbance such as play or frictional resistance between parts is reduced compared to the case where the strain detection means 46 is attached to a part on the upstream side of the transmission path. Consequently, it is possible to more accurately derive the gripping force of the collet chuck 41.

Furthermore, by deriving the gripping force of the collet chuck 41 based on the maximum strain that is the maximum value of the strain detected by the strain detection means 46, it is possible to suppress influences due to variations and noise per state change from the release state to the gripping state, and more accurately derive the gripping force of the collet chuck 41.

Although the configuration of deriving the gripping force of the collet chuck 41 in the NC lathe 1 according to the present embodiment based on the configurations of the first headstock 3 and the first spindle 4 has been described above, the driving force transmission mechanism from a driving source of the second headstock 7 and the second spindle 8 to the chuck employs the same configuration as those of the first headstock 3 and the first spindle 4. Accordingly, although description thereof will be omitted, the gripping force of the chuck can be accurately derived with a low-cost configuration based on the detection result of the strain detection means attached to the non-rotary transmitting member for the second headstock 7 and the second spindle 8. Note that the cut workpiece W2 of the second spindle 8 corresponds to one example of a workpiece.

Next, the shifter lever 341 described so far and a modified example thereof will be further described. In the following description, components with identical names to the components described heretofore have been assigned the same reference symbols as those used heretofore, and duplicate description thereof has sometimes been omitted.

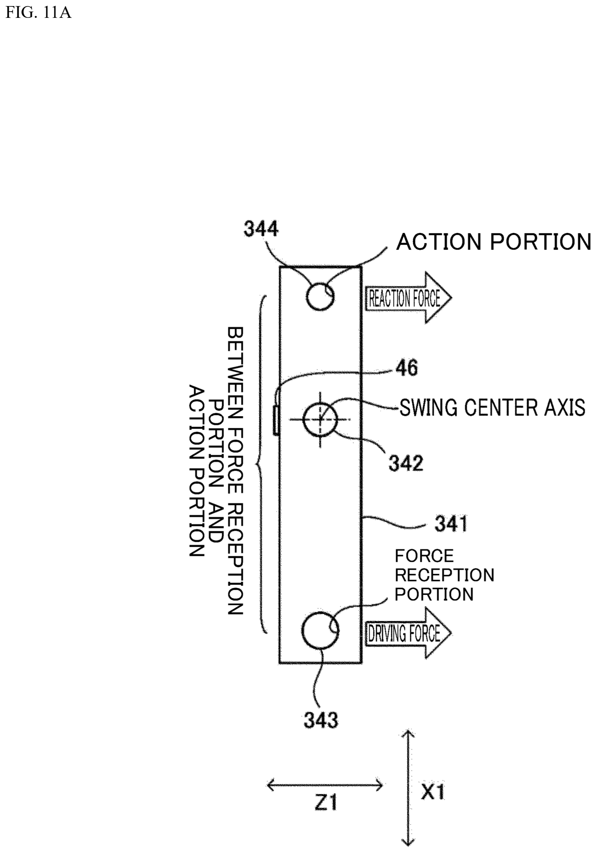

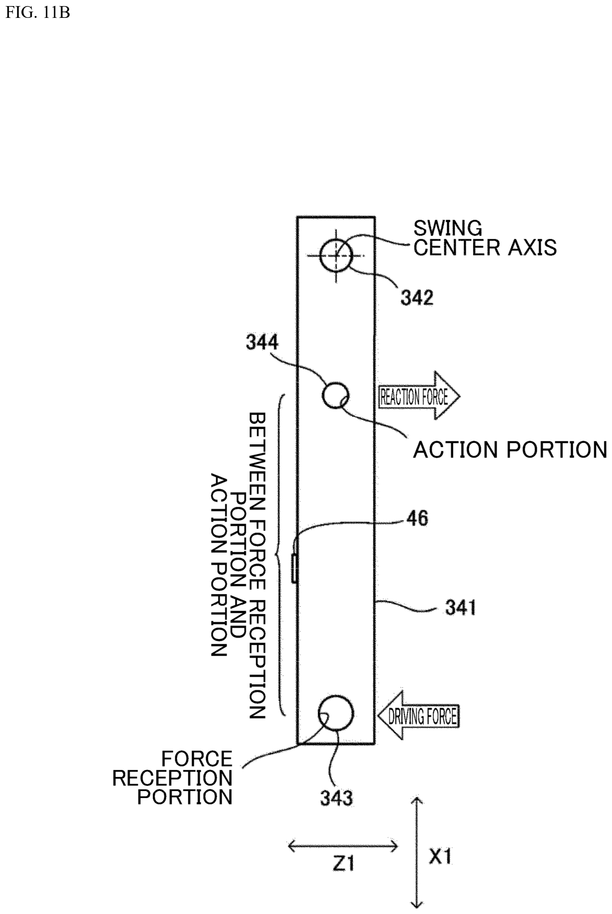

FIG. 11A is a schematic diagram illustrating a positional relationship between the force received by the shifter lever 341 illustrated in FIG. 5 and the swing center, and FIG. 11B is a schematic diagram illustrating the shifter lever 341 according to the modified example, and a positional relationship between the force received by the shifter lever 341 according to the modified example and the swing center.

As illustrated in FIG. 11A, as for the shifter lever 341 according to the present embodiment, the lever shaft 342 and the swing center axis that is the axial center axis of the lever shaft 342 are positioned between the force reception portion at which the shifter lever 341 receives the driving force from the air cylinder 33 (see FIG. 3) via the connection pin 343 and the action portion at which the shifter lever 341 receives the reaction force from the shifter 452 (see FIG. 3) via the action shaft 344. Furthermore, as described above, the strain detection means 46 is attached to the portion overlapping the swing center axis when the strain detection means 46 is orthogonally projected in the Z1-axis direction (the left/right direction in FIG. 11A and FIG. 11B). By disposing the strain detection means 46 between the force reception portion and the action portion, it is possible to accurately detect the strain produced in the shifter lever 341 when the shifter lever 341 receives an external force. Furthermore, although, by disposing the strain detection means 46 on the side surface of the shifter lever 341 and at a position close to the swing center axis, it is possible to more accurately detect the strain, the strain detection means 46 is attached to the portion overlapping the swing center axis when the strain detection means 46 is orthogonally projected in the Z1-axis direction in the configuration according to the present embodiment, so that it is possible to more accurately detect the strain. Note that the force reception portion and the action portion illustrated in FIG. 11A and FIG. 11B are portions at which the shifter lever 341 receives the force when the state of the first spindle 4 is changed from the release state to the gripping state.

As illustrated in FIG. 11B, the shifter lever 341 according to the modified example includes the lever shaft 342 and the swing center axis positioned not between the force reception portion and the action portion, but on the outer side of the force reception portion and the action portion. In this modified example, too, the strain detection means 46 is attached to the side surface of the shifter lever 341 and between the force reception portion and the action portion. Even in the shifter lever 341 according to this modified example, when the state of the first spindle 4 is changed from the release state to the gripping state, a great strain is produced between the force reception portion and the action portion. Hence, although an attachment position of the strain detection means 46 may be positioned at any position between the force reception portion and the action portion, a strain becomes great particularly on the side surface of the shifter lever 341, and at a portion that is at equal distances from the force reception portion and the action portion, the strain detection means 46 is attached to this portion in this modified example.

The present invention is not limited to the above-described embodiment and modified example, and various modified examples may be applied thereto within the scope set forth in the aspects. For example, the present embodiment has described the example where the present invention is applied to the so-called Swiss-type NC lathe 1 including the guide bush 5, the present invention may be applied to other machine tools such as lathes and machining centers that do not include the guide bush 5. Furthermore, the second headstock 7, the second spindle 8, and the second tool post 9 may be omitted. Furthermore, the strain detection means 46 may be attached to any portion of the non-rotary transmitting member 34. In this regard, by attaching the strain detection means 46 to the shifter lever 341 as described above, it is possible to more accurately derive the gripping force of the collet chuck 41.

Note that components included only in the descriptions of the modified examples described above may also be applied to other modified examples.

## Claims

1. A machine tool comprising:
a spindle that includes a gripping unit that grips a workpiece;
a headstock that rotatably supports the spindle;
an actuator that is attached to the headstock and generates a driving force for changing a state of the gripping unit between a gripping state for gripping the workpiece and a release state for releasing the grip of the workpiece;
a non-rotary transmitting member that is attached to the headstock and transmits the driving force received from the actuator;
a rotary transmitting member that rotates together the spindle and transmits to the gripping unit the driving force received from the non-rotary transmitting member;
strain detection means that is attached to the non-rotary transmitting member, and detects a strain of the non-rotary transmitting member produced when the driving force is transmitted from the actuator to the gripping unit; and
a deriving unit that derives a gripping force of the gripping unit based on a detection result of the strain detection means.

2. The machine tool according to claim 1, wherein
the rotary transmitting member includes a claw member that can change a posture between a first posture for bringing the gripping unit into the gripping state and a second posture for bringing the gripping unit into the release state, and a shifter that can change a position between a first position for causing the claw member to take the first posture and a second position for causing the claw member to take the second posture by moving in an axis direction of the spindle,
the non-rotary transmitting member includes a shifter lever that moves the shifter in the axis direction, and
the strain detection means detects a strain of the shifter lever.

3. The machine tool according to claim 2, wherein the strain detection means detects a strain at a portion between a force reception portion at which the shifter lever receives the driving force from the actuator, and an action portion at which a reaction force received by the shifter lever from the shifter acts when the driving force received by the shifter lever is transmitted to the shifter.

4. The machine tool according to claim 3, wherein
the shifter lever is swingable about a swing center axis as a swing center, and swings to move the shifter in the axis direction, and
the strain detection means is formed in parallel to the swing center axis, and detects a strain on a side surface of the shifter lever.

5. The machine tool according to claim 3, wherein
the shifter lever is swingable about a swing center axis as a swing center, and swings to move the shifter in the axis direction, and
the strain detection means detects a strain at a portion at which a distance from the swing center axis is shorter than a distance from the force reception portion and the action portion.

6. The machine tool according to any one of claims 1 to 5, wherein the deriving unit derives the gripping force of the gripping unit based on a maximum value of the strain of the non-rotary transmitting member at a time of the change of the state from the release state to the gripping state detected by the strain detection means.
